# EUROPÄISCHE PATENTSCHRIFT

(11) **EP 1 487 086 B1**
(45) Veröffentlichungstag und Bekanntmachung des Hinweises auf die Patenterteilung: **22.08.2007**
(21) Anmeldenummer: 04013457.9
(22) Anmeldetag: 08.06.2004
(51) Int. Cl.: H02K 3/12, H02K 15/02

(54) **Bausatz zum Erstellen einer elektrischen Maschine**
Assembly for construction of an electric machine
Assemblage pour une machine électrique

(30) Priorität: 10.06.2003 DE 10326050
(43) Veröffentlichungstag der Anmeldung: 15.12.2004
(73) Patentinhaber: LuK Lamellen und Kupplungsbau Beteiligungs KG, 77813 Bühl (DE)
(72) Erfinder: Hill, Wolfgang, 76135 Karlsruhe (DE)

(56) Entgegenhaltungen:
- US-A- 4 912 831
- US-A1- 2002 047 454
- US-B1- 6 353 198
- PATENT ABSTRACTS OF JAPAN Bd. 005, Nr. 121 (E-068), 5. August 1981 (1981-08-05) -& JP 56 058749 A (TOSHIBA CORP), 21. Mai 1981 (1981-05-21)

## Beschreibung

Die Erfindung betrifft einen Bausatz zum Erstellen einer ein Primärteil und ein relativ dazu bewegbares Sekundärteil aufweisenden elektrischen Maschine, mit einem Nuten aufweisenden weichmagnetischen Kern für das Primärteil, mit in die Nuten einsetzbaren Nutstäben für eine verteilte Stabwicklung, mit Verbindungsleitern zum Verbinden der in Montagesstellung an einer Stirnseite des weichmagnetischen Kerns aus den Nuten herausragen Enden der Nutstäbe.

Ein derartiger Bausatz für eine rotierende elektrische Maschine ist aus DE 42 34 175 C2 bekannt. Er weist etwa U-förmige Verbindungsleiter auf, die in Montagestellung an einer Stirnseite des weichmagnetischen Kerns angeordnet sind. Die Verbindungsleiter haben jeweils einen Quersteg und daran angeordnete Schenkel. In Montagestellung erstreckt sich der Quersteg etwa in Umfangsrichtung des weichmagnetischen Kerns, wobei die Schenkel, ausgehend von dem Quersteg, etwa radial zur Rotationsachse der elektrischen Maschine nach außen verlaufen. Die Schenkel haben jeweils eine als Aussparung ausgebildete Aufnahme, die in Montagestellung jeweils ein an der Stirnseite des weichmagnetischen Kerns aus einer Nut herausragendes Ende eines Nutstabs aufnehmen. Mit Hilfe der Verbindungsleiter sind jeweils mehrere, über den Umfang des weichmagnetischen Kerns verteilt angeordnete Nutstäbe zu einem Wicklungsstrang in Reihe geschaltet, der in der Aufsicht auf den Umfang des weichmagnetischen Kerns etwa einen mäanderförmigen Verlauf aufweist. Dabei bilden mehrere Wicklungsstränge eine verteilte Wicklung, deren Wicklungsspulen sich bereichsweise überdecken. Bei der Fertigung der elektrischen Maschine werden die Nutstäbe und die Verbindungsleiter zunächst an dem weichmagnetischen Kern vormontiert und danach an den Verbindungsstellen zwischen den Nutstäben und den Verbindungsleitern durch Schweißnähte miteinander verbunden.

Die US 6,353,198 beschreibt eine elektrische Maschine mit einem einen weichmagnetischen, Nuten aufweisenden Stator mit einer Stabwicklung aus Nutenstäben, deren Enden aus den Nuten hervorragen und von durch Schlitze getrennte Verbindungsleitern mit zweigeteilten Teilbereichen aufgenommen werden.

Obwohl sich derartige Bausätze in Praxis bewährt haben, weisen Sie noch Nachteile auf. So können beim Zusammenfügen der Nutstabenden und der Verbindungsleiter aufgrund von Fertigungstoleranzen relativ große Fügespalte an den Verbindungsstellen auftreten, die bei dem anschließenden Schweißprozess zu Fehlern führen, z.B. zur Bildung von Lunkern oder Kerben, einem Nahteinfall oder sogar von Unterbrechungen in der Schweißnaht. Es ist auch bereits bekannt, die Verbindungsleiter durch einen Lötprozess mit den Nutstabenden zu verbinden. Auch dabei kann es zu Fehlern durch ungleichmäßige Fügespalte zwischen den miteinander zu verbindenden Teilen kommen, da das Lot dann nicht oder nur unvollständig in den Fügespalt fließt. Die Fertigungstoleranzen können Abweichungen der Bauteile von Sollmassen und/oder Winkelfehler umfassen. Damit die Bauteile montiert werden können, sind die Abmessungen der Bauteile an den ungünstigsten Fall anzupassen, d.h. sie sind so zu wählen, dass bei im Toleranzbereich maximalen Abmessungen an den Nutstabenden und minimalen Abmessungen der Aussparungen eine Montage der Bauteile gerade noch möglich ist. Da bereits bei einer einzigen fehlerhaften Verbindung zwischen einem Verbindungsleiter und einem Nutstabende die gesamte elektrische Maschine unbrauchbar wird, verursachen derartige, durch Fertigungstoleranzen verursachte Fehler, einen erheblichen Mehraufwand und entsprechend hohe Kosten. Unter einer Nut wird auch eine Durchgangslochung des weichmagnetischen Kerns verstanden, die an ihrem Umfang geschlossen ist.

Es besteht deshalb die Aufgabe, einen kostengünstig herstellbaren Bausatz zum Erstellen einer elektrischen Maschine bereit zu stellen, der leicht zu montieren ist und der bei seiner Monatage eine zuverlässige Verbindung zwischen den Nutstäben und den Verbindungsleitern ermöglicht.

Diese Aufgabe wird mit den Merkmalen des Patentanspruchs 1 gelöst. Erfindungsgemäß weisen die Verbindungsleiter im Bereich ihrer Aufnahmen jeweils wenigstens zwei Teilbereiche auf, zwischen denen die Aufnahme gebildet ist. Dabei sind die Teilbereiche an der in Montagesstellung dem Sekundärteil abgewandten Seite der Aufnahme durch einen mit der Aufnahme verbundenen Schlitz derart voneinander getrennt, dass die Teilbereiche über die gesamte Fläche der Aufnahme gegen die Rückstellkraft des Verbindungsleiter-Werkstoffs elastisch aufeinander zu- und voneinander wegbewegbar sind. In vorteilhafter Weise ergibt sich somit eine Art Federklemme, bei der die Abmessungen der zwischen den Teilbereichen gebildeten Aufnahme durch elastisches Verformen des Verbindungsleiters auf einfache Weise an die Abmessungen des in die Aufnahme einzusetzenden Nutstabendes angepasst werden können. Eventuelle Fertigungstoleranzen der Nutstabenden und/oder der Verbindungsleiter werden durch den Schlitz ausgeglichen, der nach der Montage breiter oder schmäler sein kann als vor der Montage. Die Toleranzbereiche der Abmessungen der Verbindungsleiter und der Nutstabenden sind vorzugsweise derart gewählt, dass bei im Toleranzbereich minimalen Abmessungen an einem Nutstabende und maximalen Abmessungen einer damit zu verbindenden Aufnahme zwischen den Teilbereichen und den Nutstabenden kein oder nur ein sehr schmaler Fügespalt auftritt, wenn das Nutstabende in der Aufnahme angeordnet ist. Somit wird beim anschließenden Verschweißen oder Verlöten der Nutstabenden mit den Verbindungsleitern eine prozesssichere und fehlerfreie Verbindung der Teile zu einem Wicklungsstrang ermöglicht.

Bei einer vorteilhaften Ausführungsform der Erfindung weist der mindestens eine Verbindungsleiter wenigstens zwei U- oder klammerförmig ausgebildete Verbindungsleiterteile auf, deren Schenkelteile die Teilbereiche bilden, wobei die Schenkelteile eines inneren Verbindungsleiterteils in Montagesstellung zwischen den Schenkelteilen eines äußeren Verbindungsleiterteils angeordnet sind. Dabei ist jeweils zwischen einem Schenkelteil des äußeren Verbindungsleiterteils und einem Schenkelteil des inneren Verbindungsleiterteils eine Aufnahme für ein Nutstabende gebildet. In Montagestellung presst das Schenkelteil des äußeren Verbindungsleiterteils jeweils das in der Aufnahme angeordnete Nutstabende gegen das gegenüberliegende Schenkelteil des inneren Verbindungsleiterteils. Die Schenkelteile sind in dem Raum angeordnet, der in Erstreckungsrichtung der Nuten vor den die Nuten seitlich begrenzenden Zähnen des magnetischen Kerns liegt. Die beiden Teilbereiche des inneren Verbindungsleiterteils liegen vor den Zähnen, die tangential zwischen den miteinander zu verbindenden Nutstabenden angeordnet sind und die beiden Teilbereiche des äu-ßeren Verbindungsleiterteils nutzen den Raum vor den Zähnen, die tangential außerhalb der zu verbindenden Nutstabenden angeordnet sind.

Bei einer zweckmäßigen Ausgestaltung der Erfindung weisen die Verbindungsleiterteile Querstege auf, welche die Schenkelteile miteinander verbinden, wobei die Verbindungsleiterteile derart ausgebildet sind, dass die Querstege der äußeren und inneren Verbindungsleiterteile mindestens eines Verbindungsleiters in Montagesstellung in Erstreckungsrichtung der Nuten hintereinander angeordnet sind. Dadurch ergibt sich eine kompakt aufgebaute Stabwicklung.

Die inneren Verbindungsleiterteile weisen vorteilhaft über ihre gesamte Erstreckungsfläche quer zur Erstreckungsfläche eine etwa konstante Dicke auf. Die inneren Verbindungsleiterteile können dann bei ihrer Fertigung mit nur einem Hub aus einem Kupferblechband ausgestanzt werden. Weitere Stanz- und/oder Umformschritte sind nicht erforderlich. Die inneren Verbindungsleiterteile können dadurch kostengünstig hergestellt werden.

Vorteilhaft ist, wenn die Verbindungsleiterteile derart ausgebildet sind, dass der Quersteg wenigstens einen inneren Verbindungsleiterteils in Montagesstellung dichter an dem weichmagnetischen Kern angeordnet ist als der Quersteg wenigstens eines äußeren Verbindungsleiterteils. Das äußere Verbindungsleiterteil kann dabei den Quersteg des inneren Verbindungsleiterteils umgreifen und in Montagestellung in dem von dem weichmagnetischen Kern entfernten Wickelkopfraum der Stabwicklung etwa in Verlängerung des die Zähne miteinander verbindenden Jochs des weichmagnetischen Kerns angeordnet sein Das äußere Verbindungsleiterteil weist in Erstreckungs- bzw. Stromflussrichtung bevorzugt einen etwa konstanten Querschnitt auf. Es kann als Umformteil aus einem Profidraht ohne Stanzverschnitt hergestellt werden.

Bei einer vorteilhaften Ausführungsform der Erfindung sind die Verbindungsleiterteile der einzelnen Verbindungsleiter jeweils miteinander verbunden, vorzugsweise mittels einer Schnappverbindung. Der Bausatz ermöglicht dann eine noch einfachere Montage der elektrischen Maschine. Die Verbindungsleiterteile eines Verbindungsleiters können jeweils separat vorgefertigt und danach mittels der Schnappverbindung formschlüssig miteinander verbunden werden. Die Schnappverbindung kann etwa in der Mitte der Querstege und/oder an deren Enden angeordnet sein.

Bei einer weiteren zweckmäßigen Ausführungsform der Erfindung sind die Verbindungsleiterteile derart ausgebildet, dass die Querstege der äußeren und inneren Verbindungsleiterteile mindestens eines Verbindungsleiters in Montagestellung in einer normal zu der durch die Nuten aufgespannten Ebene verlaufenden Richtung hintereinander angeordnet sind. Die von den Nuten aufgespannte Ebene liegt im wesentlichen parallel zum Spalt zwischen dem Primär- und Sekundärteil. Bei einer rotierenden elektrischen Maschine liegen dann die Querstege radial zur Rotationsachse der Maschine versetzt nebeneinander. Das äußere Verbindungsleiterteil wird vorzugsweise aus einem Leiterband geschnitten, dessen Dicke etwas geringer ist als die Hälfte der Zahnbreite der in Montagestellung benachbart zu den Schenkelteilen des äußeren Verbindungsleiterteils angeordneten Zähne des weichmagnetischen Kerns. In Erstreckungsrichtung der Nuten beträgt die Breite der äußeren Verbindungsleiterteile vorzugsweise etwa der Breite des Wickelkopfes.

Vorteilhaft ist, wenn bei wenigstens einem äußeren Verbindungsleiterteil die Breite, die dessen Schenkelteile in einer normal zur Erstreckungsebene des Verbindungsleiterteils verlaufenden Richtung aufweisen, etwa halb so groß ist wie die Breite, die der Quersteg dieses Verbindungsleiterteils in dieser Richtung hat. Die Fertigung des äußeren Verbindungsleiterteils kann in der Weise erfolgen, dass zunächst ein gerader Streifen aus einem Leiterband geschnitten wird, der einen inneren oder mittleren Streifenabschnitt aufweist, der den späteren Quersteg des Verbindungsleiterteils bildet und der an seinen Enden durch äu-ßere Streifenabschnitte in Längsrichtung des Leiterbands gerade verlängert ist. Nach dem Ausschneiden des Streifens aus dem Leiterband werden die äußeren Streifenabschnitte U-förmig umgebogen und bilden dann die Schenkelteile des äußeren Verbindungsleiterteils. Bei einem Bausatz für eine rotierende elektrische Maschine wird der Quersteg in der Erstreckungseben des äußeren Verbindungsleiterteils in einem Umformschritt derart gebogen, dass der Quersteg in Montagestellung entlang einer konzentrisch zur Rotationsachse der Maschine angeordneten Kreislinie verläuft. Da die Breite der äußeren Streifenabschnitte etwa der Hälfte der Breite des inneren Streifenabschnitts entspricht, kann das Verbindungsleiterteil praktisch ohne Verschnitt aus dem Leiterband ausgeschnitten werden.

Die inneren Verbindungsleiterteile werden vorzugsweise durch Prägen und Stanzen hergestellt oder aus einer Profilstange herausgeschnitten. Bei Letzterem entspricht der Querschnitt der gezogene Profilstange etwa der Aufsicht auf das innere Verbindungsleiterteil. Die Profilstange wird mit einer Profilbandsäge in kurze Stücke geteilt, die bereits den inneren Verbindungsleiterteilen entsprechen. Das Sägeblatt der Profilbandsäge kann in einer rechtwinklig zur Längserstreckung des Sägeblatts verlaufenden Ebene einen Absatz oder eine Stufe aufweisen. Die Verbindungsleiterteile können dann in einem Arbeitsgang von der Profilstange abgetrennt werden. Bei einem bevorzugten Herstellungsverfahren sind mehrere Profilstangen an einem kreis- oder ringförmigen Magazin positioniert, das an einer Drehmaschine angeordnet ist. Das Abtrennen der inneren Verbindungsleiterteile von den Profilstangen erfolgt durch Einstechwerkzeuge in einem dem Drehen ähnlichen Vorgang. Neben dem Sägen bzw. Drehen ist zur Herstellung der inneren Verbindungsleiterteile ggf. lediglich ein Arbeitsschritt zum Entgraten erforderlich.

Alternativ können die inneren Verbindungsleiterteile auch aus einem Profilband, vorzugsweise aus sauerstoffarmem Kupfer, gefertigt werden, das einen Bereich mit einer Banddicke aufweist, die der Breite der inneren Wickelkopfschicht entspricht, und zusätzlich ein oder zwei Randbereiche hat, in denen die Banddicke in etwa der axialen Wickelkopfbreite entspricht. Aus dem Profilband werden zunächst Aufnahmen aus dem Bereich mit der geringeren Banddicke geschnitten bzw. gestanzt. Anschließend wird das Band in die Verbindungsleiterteile aufgeteilt, wobei alternativ zu einem Stanzstempel eine mitlaufende Säge oder ein Laserstrahl zum Einsatz kommen können. Das innere Teilelement wird abschließend noch im mittleren Teilbereich gekrümmt, wobei dieser Arbeitsschritt vorzugsweise beim Zusammenfügen mit dem äußeren Verbindungsleiterteil erfolgt.

Bei einer vorteilhaften Ausführungsform der Erfindung sind der Quersteg des äußeren Verbindungsleiterteils und der Quersteg des inneren Verbindungsleiters einstückig miteinander verbunden. Die Verbindungsleiterteile sind dann mittels eines Biegestanzprozesses kostengünstig herstellbar.

Bei einer anderen vorteilhaften Ausführungsform der Erfindung ist wenigstens ein Verbindungsleiter an einem Endbereich vorzugsweise einstückig mit einem Nutstab zu einem L-förmigen Formteilleiter verbunden, wobei an einem von diesem Endbereich entfernten weiteren Endbereich des Verbindungsleiters die Teilbereiche mit der dazwischen gebildeten Aufnahme für das Nutstabende eines weiteren Formteilleiters vorgesehen sind. Die Herstellung der Formteilleiter kann sowohl einstückig mit einem anschließenden Isolierschritt als auch durch Zusammenfügen von zwei separat gefertigten Teilen (Nutstab und Verbindungsleiter) erfolgen. Beim Einstecken der Nutstäbe der Formteilleiter in die Nuten des weichmagnetischen Kerns wird durch die in den Nuten geführten Nutstäbe eine genaue Positionierung der Formteilleiter ermöglicht. Das Verfahren wird hierdurch produktiver und die Anzahl der nach der Montage zu realisierenden Verbindungsstellen halbiert.

Vorteilhaft ist, wenn der Bausatz mehrere Arten von Formteilleitern mit unterschiedlich langen Nutstäben aufweist, wenn die Länge der Nutstäbe derart auf die Abmessungen der Verbindungsleiter und des weichmagnetischen Kerns abgestimmt ist, dass in Montagestellung an wenigstens einer Stirnseite des weichmagnetischen Kerns die Verbindungsleiter in mehreren, in Erstreckungsrichtung der Nutstäbe zueinander versetzten Lagen angeordnet sind, und wenn die einzelnen Wicklungsstränge der Stabwicklung vorzugsweise baugleiche Formteilleiter aufweisen. Die mit dem Bausatz hergestellte Maschine weist dann eine Stabwicklung mit kompakten Wickelköpfen auf.

Bei einer zweckmäßigen Ausgestaltung der Erfindung sind zusätzlich zu den die Teilbereiche aufweisenden ersten Verbindungsleitern zweite Verbindungsleiter vorgesehen, die jeweils zwei Nutstäbe U-förmig und vorzugsweise einstückig miteinander verbinden, wobei die Verbindungsleiter derart ausgebildet sind, dass die ersten Verbindungsleiter bei wenigstens einem Wicklungsstrang der Stabwicklung in Montagestellung jeweils an einer ersten Stirnseite des weichmagnetischen Kerns und die zweiten Verbindungsleiter jeweils an der dieser Stirnseite gegenüberliegenden zweiten Stirnseite des weichmagnetischen Kerns angeordnet sind. Der Bausatz braucht dann nur wenige unterschiedliche Teile für die Stabwicklung aufzuweisen und ist daher kostengünstig herstellbar. Die mit dem Bausatz hergestellte Maschine weist eine weitgehend symmetrische Stabwicklung auf.

Bei einer vorteilhaften Ausführungsform der Erfindung sind die Teilbereiche wenigstens einer Aufnahme an ihren in Montagestellung dem Sekundärteil zugewandten Enden durch einen wenigstens eine Biegeverformungsstelle aufweisenden Brückenbereich einstückig miteinander verbunden. Die Verbindungsleiter können dann kostengünstig hergestellt werden und sind außerdem gut handhabbar, da die Anzahl der zu montierenden Einzelteile entsprechend reduziert ist. Dennoch ermöglicht die im Brückenbereich vorgesehene Verformungsstelle bei der Montage der elektrischen Maschine auf einfache Weise eine Anpassung der Abmessungen der zwischen den Teilbereichen des Verbindungsleiters gebildeten Aufnahme an die Abmessungen des damit zu verbindenden Nutstabendes.

Vorteilhaft ist, wenn der Brückenbereich, ausgehend von dem einen Teilbereich zu dem anderen Teilbereich, einen von einer geraden Linie abweichenden, vorzugsweise wellenlinien- oder zickzackförmigen Verlauf aufweist. Die Abmessungen der Aufnahme können dann bei der Montage der elektrischen Maschine noch leichter durch Biegeverformung des Brückenbereichs an die Abmessungen des Nutstabendes angepasst werden.

Bei einer bevorzugten Ausführungsform der Erfindung weisen die von dem Brückenbereich entfernten Endbereiche der Teilbereiche Verbindungsstellen zum formschlüssigen Verbinden und insbesondere Verhaken und/oder Verstemmen der Teilbereiche auf, wobei diese Verbindungsstellen vorzugsweise von der Aufnahme für das Nutstabende beabstandet sind. Auch durch diese Maßnahme wird eine einfache Montage der elektrischen Maschine ermöglicht.

Der mit der Aufnahme für das Nutstabende verbundene Schlitz des Verbindungsleiters weist bevorzugt eine Komponente auf, die in einer in Montagestellung normal zur Erstreckungsrichtung der Nuten verlaufenden Ebene schräg zur der durch die Nuten aufgespannten Ebene verläuft. Durch diese Maßnahme wird auch beim Auftreten von Fertigungstoleranzen in den Abmessungen der Nutstabenden und/oder der Verbindungsleiter eine geringe Spaltweite an der (den) Verbindungsstelle(n) ermöglicht, dass der Spalt nach der Montage der elektrischen Maschine durch eine Schweißnaht oder ein Lötmittel prozesssicher überbrückt werden kann. Beim Löten wird vorzugsweise eine Niedertemperaturlotpaste auf die Nutstabenden aufgetragen. Bei der Montage vermeidet die Federwirkung zwischen den beiden Teilbereichen eine unerwünschte Verfrachtung der Lotschicht und gewährleistet einen flächigen Kontakt der Lotpastenschicht zum Verbindungsleiter.

Vorteilhaft ist, wenn sich der Querschnitt der Aufnahmen und der Nutstabenden in Montagestellung jeweils ausgehend von dem dem Sekundärteil zugewandten Ende der Aufnahme zu dem gegenüberliegenden anderen Ende der Aufnahme hin vorzugsweise V-förmig verjüngt. Die beidseits der Aufnahme befindlichen Teilbereiche des Verbindungsleiters können dann an der dem Sekundärteil abgewandten Seite der Aufnahme durch einen in Montagestellung etwa in Höhe des Jochs des weichmagnetischen Kerns angeordneten Quersteg verbunden sein. Dabei wird im Übergangsbereich von den beidseits der Aufnahme befindlichen Teilbereichen des Verbindungsleiters zu dessen Quersteg eine ausreichende Querschnittsfläche für den elektrischen Stromfluss bereitgestellt. Somit kann die Schichtdicke bzw. die Abmessung des Verbindungsleiters in Erstreckungsrichtung der Nuten entsprechend reduziert sein. Hierdurch werden kleine Wickelköpfe ermöglicht und das Stanzen des inneren Verbindungsleiterteils wird erleichtert. Außerdem ist beim Anbringen der Schweißnaht an der Trennlinie zwischen dem Außenumfang des Nutstabendes und dem Verbindungsleiter nur eine Richtungsänderung der Schweißnaht erforderlich.

Nachfolgend sind Ausführungsbeispiele der Erfindung anhand der Zeichnung näher erläutert. Es zeigen:
- Fig. 1: einen Teilquerschnitt durch den Wickelkopf einer teilweise montierten elektrischen Rotations-Maschine in abgewickelter Darstellung, wobei die Querschnittsebene rechtwinklig zur Rotationsachse der Maschine durch Verbindungsleiter verläuft, die Nutstabenden miteinander verbinden,
- Fig. 2: eine Ansicht auf die in Gebrauchsstellung einem Sekundärteil der elektrischen Maschine abgewandte Seite eines ersten Ausführungsbeispiels eines Verbindungsleiters,
- Fig. 3: eine Aufsicht auf die in Gebrauchsstellung einem weichmagnetischen Kern der elektrischen Maschine zugewandte Seite des in Fig. 2 gezeigten Verbindungsleiters,
- Fig. 4: eine Ansicht auf die in Gebrauchsstellung einem Sekundärteil zugewandte Seite des in Fig. 2 und 3 gezeigten Verbindungsleiters,
- Fig. 5 und 6: Seitenansichten des in den Fig. 2 bis 4 und 7 bis 9 gezeigten Verbindungsleiters,
- Fig. 7: eine Ansicht auf die in Gebrauchsstellung dem Sekundärteil abgewandte Seite eines zweiten Ausführungsbeispiels eines Verbindungsleiters.
- Fig. 8: eine Aufsicht auf die in Gebrauchsstellung dem weichmagnetischen Kern abgewandte Seite des in Fig. 7 gezeigten Verbindungsleiters,
- Fig. 9: eine Ansicht auf die in Gebrauchsstellung dem Sekundärteil zugewandte Seite des in Fig. 7 und 8 gezeigten Verbindungsleiters,
- Fig. 10: eine Ansicht auf die in Gebrauchsstellung dem Sekundärteil abgewandte Seite eines dritten Ausführungsbeispiels eines Verbindungsleiters,
- Fig. 11: eine Ansicht auf die in Gebrauchsstellung dem weichmagnetischen Kern abgewandte Seite des in Fig. 10 gezeigten Verbindungsleiters,
- Fig. 12: eine Ansicht auf die in Gebrauchsstellung dem Sekundärteil zugewandte Seite des in Fig. 10 und 11 gezeigten Verbindungsleiters,
- Fig. 13 und 14: Seitenansichten der in den Fig. 10 bis 12 gezeigten Verbindungsleiter,
- Fig. 15 und 17: Seitenansichten eines einstückig mit einem Nutstab verbundenen Verbindungsleiters, wobei der Nutstab nur teilweise dargestellt ist,
- Fig. 18: eine Aufsicht auf die in Montagestellung dem Sekundärteil zugewandte Seite den in Fig. 15 bis 17 gezeigten Formteilleiters und
- Fig. 19: eine Aufsicht auf die abgewickelte Stabwicklung, wobei rechts in der oberen Hälfte der Abbildung die Bauteile der Stabwicklung in Vormontagestellung und in der unteren Hälfte der Abbildung in Endmontagestellung dargestellt sind.

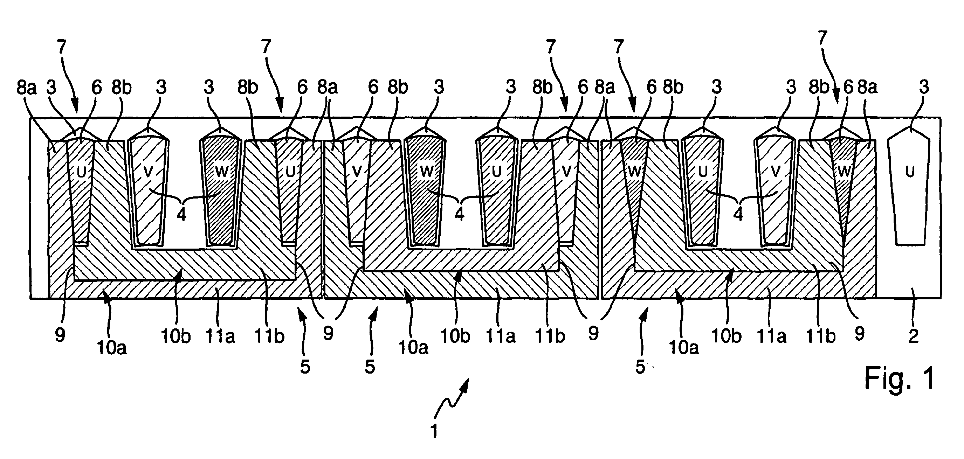

Ein Bausatz zum Erstellen einer ein Primärteil 1 und ein relativ dazu bewegbares, in der Zeichnung nicht näher dargestelltes Sekundärteil aufweisenden elektrischen Maschine hat einen weichmagnetischen Primärteil-Kern 2 mit Nuten 3 zur Aufnahme einer verteilten Stabwicklung, zu den Nuten passende Nutstäbe 4 und Verbindungsleiter 5 zum Verbinden der Nutstäbe 4. Die Enden 6 der Nutstäbe 4 ragen in Montagestellung an den Stirnseiten des weichmagnetischen Kerns 2 aus den Nuten 3 heraus und sind mittels der Verbindungsleiter 5 zu mäanderförmig verlaufenden Wicklungssträngen miteinander verbunden, die in Fig. 1 mit u, v, w bezeichnet sind. Wie in Fig. 1 rechts erkennbar ist, sind die Nuten in an sich bekannter Weise als Durchgangslochungen in dem Kern 2 ausgebildet, die an ihrem Umfang geschlossen sind. Der weichmagnetische Kern 2 ist zur Reduzierung von Wirbelstromverlusten als Blechpaket ausgebildet.

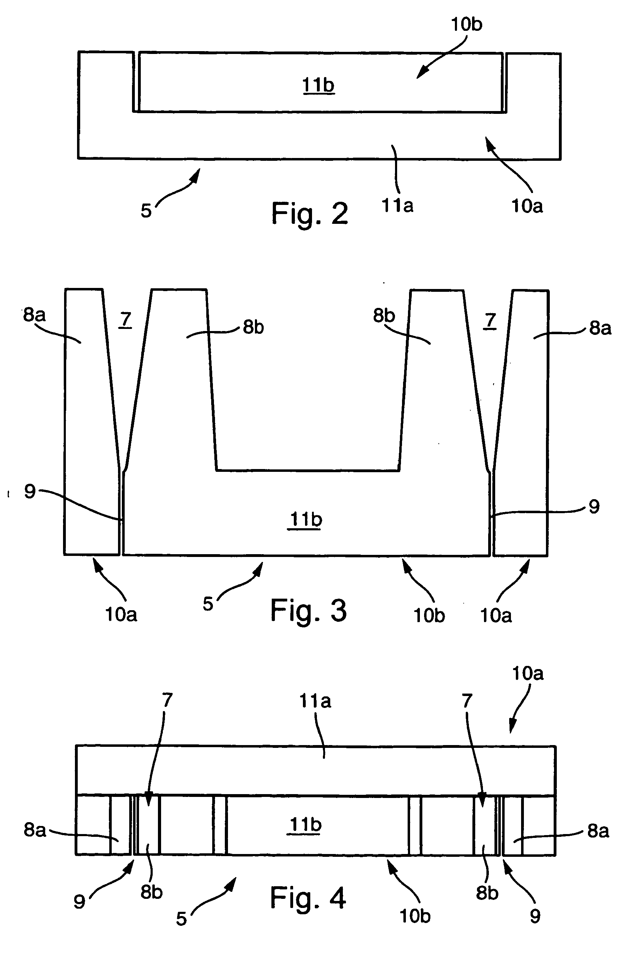

In Fig. 1 und 3 ist erkennbar, dass die Verbindungsleiter 5 jeweils zwei Aufnahmen 7 haben, in denen in Montagestellung jeweils ein Nutstabende 6 angeordnet ist. Die Form der Aufnahmen entspricht etwa der Form der Nutstabenden 6. Beidseits jeder Aufnahme 7 haben die Verbindungsleiter 5 jeweils zwei Teilbereiche 8a, 8b, die durch die Aufnahme 7 voneinander beabstandet sind. An der in Montagesstellung dem Sekundärteil abgewandten Seite der Aufnahme 7 sind die Teilbereiche 8a, 8b durch einen Schlitz 9 voneinander getrennt, der mit der Aufnahme 7 verbunden ist. In Fig. 1 ist erkennbar, dass der Schlitz 9 in Montagesstellung in Richtung der Nuttiefe verläuft.

Die Teilbereiche 8a, 8b jeder Aufnahme 7 sind jeweils durch elastisches Verformen des Verbindungsleiter-Werkstoffs zum Ausgleich von Fertigungstoleranzen etwas aufeinander zu- und voneinander wegbewegbar. Bei der Montage der elektrischen Maschine können dadurch die Abmessungen der Aufnahme auf einfache Weise an die Abmessungen des jeweils in die Aufnahme einzusetzenden Nutstabendes 6 angepasst werden. Die Abmessungen der Aufnahmen 7 und der Nutstabenden 6 sind derart aufeinander abgestimmt, dass die Nutstabenden 6 in Montagestellung jeweils federnd zwischen den Teilbereichen 8a, 8b eingespannt sind. Dadurch wird an den Kontaktflächen zwischen den Nutstabenden 6 und den Teilbereichen 8a, 8b auch beim Auftreten von Fertigungstoleranzen an den Verbindungsleitern und/oder den Nutstabenden 6 ein praktisch spaltfreier Übergang zwischen den Teilbereichen 8a, 8b und den Nutstabenden 6 ermöglicht, so dass die Teilbereiche 8a, 8b an den Kontaktstellen prozesssicher mit den Nutstabenden 6 verschweiß werden können.

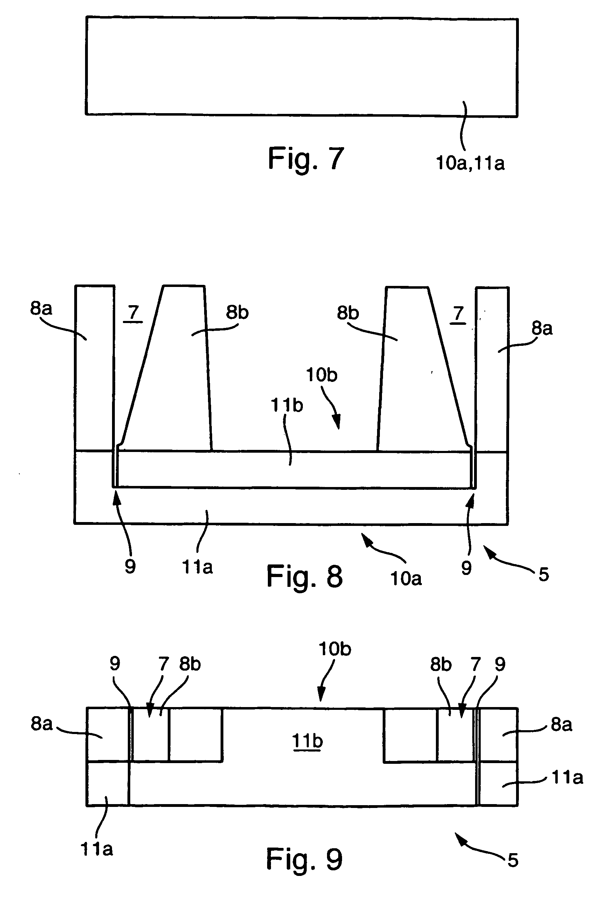

Bei dem in den Fig. 2 bis 4 gezeigten Ausführungsbeispiel weisen die Verbindungsleiter 5 jeweils zwei U- oder klammerförmig ausgebildete Verbindungsleiterteile 10a, 10b auf. Jedes Verbindungsleiterteil 10a, 10b hat jeweils zwei Schenkelteile und einen diese miteinander verbindenden Quersteg 11a, 11b. Die Schenkelteile bilden jeweils einen der Teilbereiche 8a, 8b, zwischen denen die Aufnahme 7 angeordnet ist. In Fig. 3 und 8 ist erkennbar, dass das Verbindungsleiterteil 10a das Verbindungsleiterteil 10b klammerförmig umschließt. Die das innere Verbindungsleiterteil 10b ist dabei derart in dem zwischen den Schenkelteilen des äußeren Verbindungsleiterteils 10a gebildeten Raum angeordnet, dass die freien Enden der Schenkelteile des äußeren Verbindungsleiterteils 10a in dieselbe Richtung weisen wie die freien Enden der Schenkelteile des inneren Verbindungsleiterteils 10b. Bei dem Ausführungsbeispiel nach Fig. 2 bis 4 sind die Querstege 11a des äußeren Verbindungsleiterteils 10a und die Querstege 11 b des inneren Verbindungsleiterteils 10b in Erstreckungsrichtung der Nuten 3 der elektrischen Maschine hintereinander angeordnet, wenn die Verbindungsleiterteile 10a, 10b an dem weichmagnetischen Kern 2 montiert sind. Die inneren Verbindungsleiterteile 10b werden bei ihrer Herstellung aus einem Blechband ausgestanzt und weisen jeweils über ihre gesamte Erstreckungsfläche eine etwa konstante Wandstärke auf.

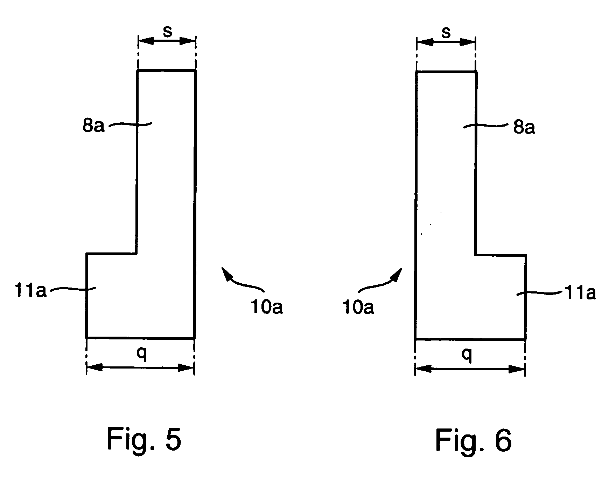

Die Verbindungsleiter 5 werden derart an dem weichmagnetischen Kern 2 montiert, dass die Querstege 11b der inneren Verbindungsleiterteile 10b dichter an dem weichmagnetischen Kern 2 angeordnet sind als die Querstege der äußeren Verbindungsleiterteile 10a. In Fig. 3 und 4 ist erkennbar, dass die Teilbereiche 8a, 8b Schrägflächen aufweisen, die an die Aufnahme 7 angrenzen. Dabei nimmt die lichte Weite der Aufnahme ausgehend von den Querstegen 11a, 11b zu den freien Enden der Teilbereiche 8a, 8b V-förmig zu. Die Nutstabenden 6 sind ebenfalls V-förmig ausgebildet. Bei dem Ausführungsbeispiel nach Fig. 8 und 9 sind nur an den Teilbereichen 8b der inneren Verbindungsleiterteile 10b Schrägflächen vorgesehen. Auch bei diesem Ausführungsbeispiel sind die Aufnahme 7 derart V-förmig ausgebildet, dass sie sich zu den freien Enden der Teilbereiche 8a, 8b hin aufweiten.

Bei dem in den Fig. 7 bis 9 gezeigten Ausführungsbeispiel sind die Querstege 11a der äußeren Verbindungsleiterteile 10a und die Querstege 11 b der inneren Verbindungsleiterteile 10b in Richtung der Nuttiefe der elektrischen Maschine hintereinander angeordnet, wenn die Verbindungsleiterteile 10a, 10b an dem weichmagnetischen Kern 2 montiert sind.

In den Fig. 5 und 6 ist erkennbar, dass bei den äußeren Verbindungsleiterteilen 10a die Breite s, die deren Schenkelteile in einer normal zur Erstreckungsebene des Verbindungsleiterteils 10a verlaufenden Richtung aufweisen, etwa halb so groß ist wie die entsprechende Breite q des Querstegs 11a dieses Verbindungsleiterteils 10a. Bei dem in Fig. 8 und 9 gezeigten Ausführungsbeispiel ist auch bei den inneren Verbindungsleiterteilen 10b die Breite der Schenkelteile etwa halb so groß ist wie die Breite des Querstegs 11b.

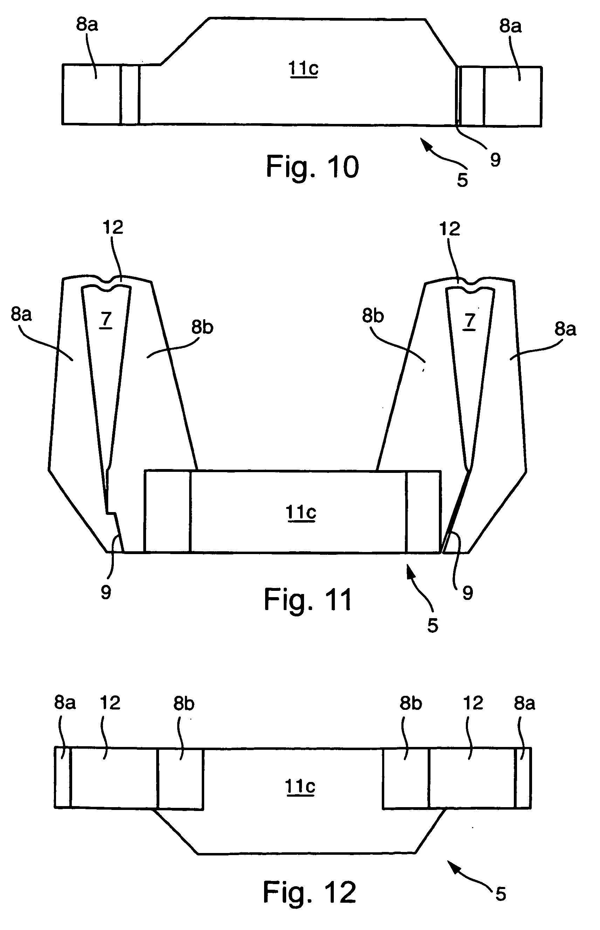

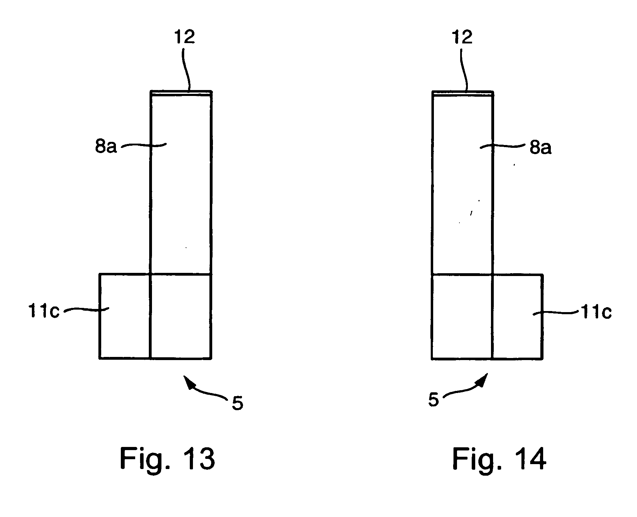

Bei den Ausführungsbeispielen nach Fig. 10 bis 18 sind die Verbindungsleiter U-förmig mit durch einen Quersteg 11 c miteinander verbundenen Schenkelteilen ausgebildet. Die relativ zueinander bewegbaren Teilbereiche 8a, 8b bilden die Schenkelteile und sind an ihren von dem Quersteg 11 c entfernten Enden durch einen Brückenbereich 12 einstückig miteinander verbunden, der als Verformungsstelle ausgebildet ist. In Fig. 11 ist erkennbar, dass die Brückenbereiche 12 jeweils ausgehend von dem Teilbereich 8a zu dem Teilbereich 8b einen von einer geraden Linie abweichenden, wellenlinienförmigen Verlauf aufweisen. Der Brückenbereich weist eine Einprägung auf, die in Richtung der Nutbreite eine federnde Bewegung der beiden in Richtung der Nuttiefe verlaufenden Teilbereiche 8a, 8b ermöglicht und die bei der Montage des Sekundärteils etwas über die Luftspaltoberfläche des Blechpakets hinausstehen und in den in gerader Verlängerung des Luftspalts befindlichen Raum hineinragen kann. Das von dem Brückenbereich 12 entfernte Ende des inneren Teilbereichs 8b ist starr mit dem Quersteg 11 c verbunden. Durch Verformen des Brückenbereichs 12 sind die äußeren Teilbereiche 8a auf den Quersteg 11c zu- und von diesem wegbewegbar.

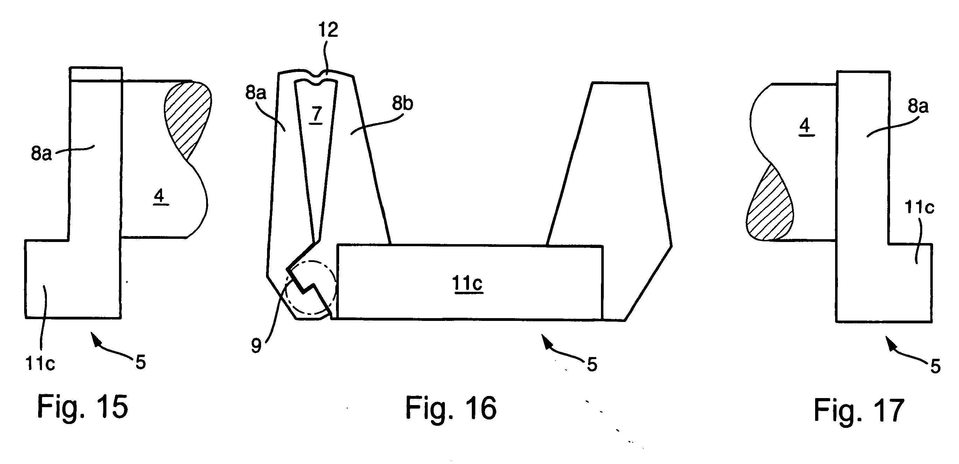

Die von dem Brückenbereich 12 entfernten Endbereiche der Teilbereiche 8a, 8b weisen Verbindungsstellen zum formschlüssigen Verbinden oder Verstemmen des freien Endes des Teilbereichs 8a mit dem gegenüberliegenden Endbereich des Teilbereichs 8b auf, die in Fig. 16 durch einen punktierten Kreis markiert sind. Der freie Endbereich des Teilbereichs 8a ist etwa hakenförmig ausgebildet und hintergreift in Gebrauchsstellung einen Vorsprung des gegenüberliegenden Endbereichs des Teilbereichs 8b. In Fig. 11 und 16 ist erkennbar, dass der zwischen diesen Endbereichen gebildete Schlitz 9 eine Komponente aufweist, die schräg zur Längserstreckungsrichtung des Querstegs 11 c verläuft.

Bei dem Ausführungsbeispiel nach Fig. 15 bis 18 ist der Verbindungsleiter 5 an einem Endbereich einstückig mit einem Nutstab 4 zu einem etwa L-förmigen Formteilleiter verbunden. An dem gegenüberliegenden anderen Endbereich des Verbindungsleiters 5 sind die Teilbereiche 8a, 8b mit der dazwischen gebildeten Aufnahme 7 für ein Nutstabende 6 eines weiteren Formteilleiters vorgesehen.

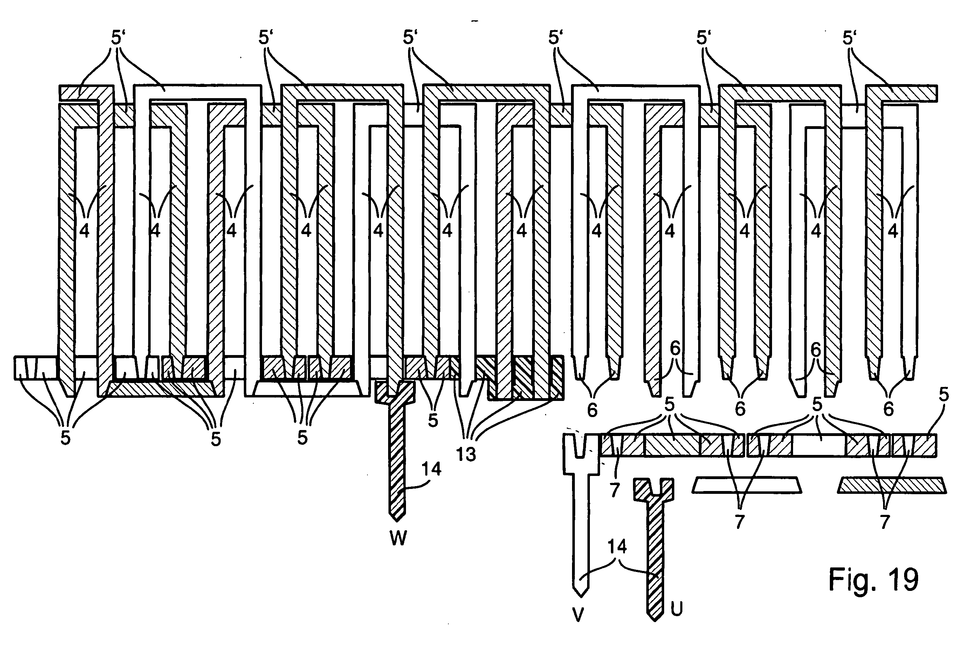

Bei dem Ausführungsbeispiel nach Fig. 19 sind die Formteilleiter U-förmig ausgebildet und weisen jeweils zwei parallel zueinander verlaufende Nutstäbe 4 auf, die einstückig über einen Verbindungsleiter 5' miteinander verbunden sind. Der Bausatz weist zwei Arten von Formteilleitern auf, deren Nutstäbe 4 unterschiedlich lang sind. Deutlich ist erkennbar, dass die Verbindungsleiter 5, 5' an den Stirnseiten des weichmagnetischen Kerns jeweils in zwei in Erstreckungsrichtung der Nutstäbe 4 zueinander versetzten Lagen angeordnet sind.

Bei der Montage der elektrischen Maschine werden zunächst alle U-förmigen inneren Formteilleiter des symmetrischen Wickelkopfes mit den Nutstäben 4 in die Nuten 3 des weichmagnetischen Kerns 2 axial eingeschoben. Dabei sind die freien Enden aller Nutstäbe 4 an derselben Seite des weichmagnetischen Kerns 2 angeordnet. Anschließend wird mit einer dünnen, in der Zeichnung nicht näher dargestellten Isolierscheibe diese innere Wickelkopfschicht abgedeckt. Nun erfolgt in entsprechender Weise die Montage aller äußeren Formteilleiter an dem weichmagnetischen Kern 2. Dann wird der weichmagnetische Kern 2 mit den daran angeordneten Formteilleitern umgedreht, um durch Messen des elektrischen Widerstands zwischen den freiliegenden Nutstabenden 6 die Isolation der Formteilleiter zueinander und zu dem weichmagnetische Kern 2 zu überprüfen. Werden dabei keine Fehler festgestellt, erfolgt die Montage und dann das Schweißen der inneren Verbindungsleiter 5 auf die Nutstabenden 6 der kurzen Nutstäbe 4. Danach wird auch auf dieser Seite eine dünne Isolierscheibe aufgelegt und anschließend die äußeren Verbindungsleiter und ein Sternpunktleiterteil 13 angefügt.

Die dünnen Isolierscheiben zwischen den Wickelkopfhälften und zwischen den Stirnseiten des weichmagnetischen Kerns 2 und den inneren Wickelkopfschichten bestehen vorzugsweise aus einem tränkbaren Schichtmaterial und dienen primär als Abstandshalter. Die Isolationsfestigkeit wird durch das Imprägnieren mit einem Isolierharz vorteilhaft bei Unter- und/oder Überdruck sichergestellt. Eine vollständige Füllung aller Hohlräume und Spalte in den Wickelköpfen gewährleistet die Isolation der Leiterteile auch in Umfangsrichtung des weichmagnetischen Kerns 2.

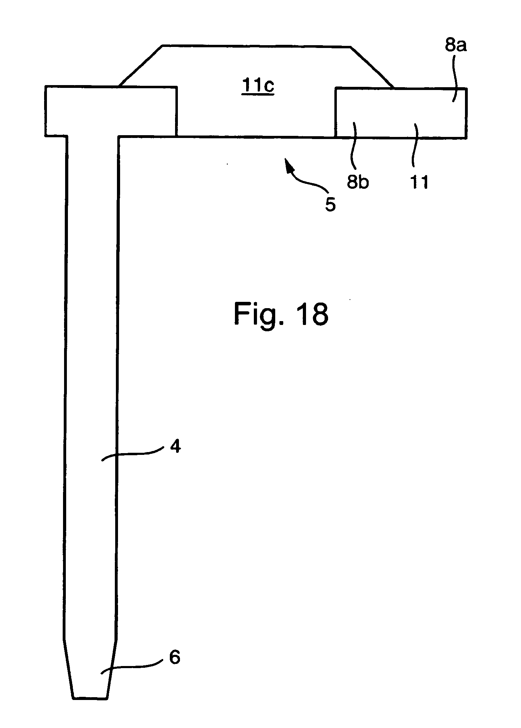

Alternativ zu U-förmigen Formteilleitern ist die Stabwicklung auch aus L-förmigen Formteilleitern zusammenfügbar (Fig. 18). Jeder L-förmige Formteilleiter besteht aus einem Nutstab 4 und einem Verbindungsleiter 5, wobei die Herstellung sowohl einstückig mit einem anschließendem Isolierschritt als auch durch Zusammenfügen zweier separat gefertigter Teile erfolgen kann. Beim Einstecken der L-Formteilleiter in den weichmagnetischen Kern 2 wird die genaue Position der L-Formteilleiter durch die Führung in den Nuten 3 sichergestellt. Eine Beschädigung der Isolation wird durch eine Einfädelschablone vermieden.

Zunächst werden alle L-Formteilleiter mit inneren Verbindungsleitern 5 in den weichmagnetischen Kern 2 eingesteckt, wobei die Reihenfolge wie folgt gewählt wird:
- Auf einer ersten Stirnseite des weichmagnetischen Kerns 2 wird eine innere Wickelkopfschicht mit einem ersten L-Formteilleitertyp, der die kürzesten Nutstäbe 4 aufweist, montiert.
- Auf der gegenüberliegenden zweiten Stirnseite des weichmagnetischen Kerns 2 wird eine innere Wickelkopfschicht mit einem zweiten L-Formteilleitertyp montiert.
- Die Verbindungen zwischen diesen beiden inneren Wickelkopfschichten werden an der zweiten Stirnseite des weichmagnetischen Kerns 2 geschweißt.
- Ein Isolierschichtteil wird auf die zweite Stirnseite montiert.
- Auf der zweiten Stirnseite wird eine äußere Wickelkopfschicht mit einem dritten L-Formteilleitertyp und einem Sternpunktleiterteil 13 montiert.
- An der ersten Stirnseite werden die Fügestellen in der inneren Wickelkopfschicht geschweißt.
- Ein Isolierschichtteil wird auf die erste Stirnseite montiert.
- Auf der ersten Stirnseite wird eine äußere Wickelkopfschicht mit einem vierten L-Formteilleitertyp, der die längsten Nutstäbe 4 aufweist, montiert.
- Die Fügestellen in der äußeren Wickelkopfschicht der ersten Stirnseite werden geschweißt.
- Gegebenenfalls werden drei Anschlussleiter 14 an die Wicklungsenden angefügt.

Mit Kontakten an den drei Wicklungsanschlüssen und am Blechpaket wird der Isolationswiderstand gemessen. Besteht kein niederohmiger Kontakt zwischen den Phasen und dem weichmagnetischen Kern 2, wird die am weichmagnetischen Kern 2 zusammengefügte Stabwicklung mit einem temperaturstabilen Isolierharz vorzugsweise bei erwärmter Stabwicklung unter Vakuum imprägniert.

Alternativ zum Verbinden separat vorgefertigter Verbindungsleiter 5 und Nutstäbe 4 in einem der Montage vorgelagerten Arbeitsschritt, können die L-Formteilleiter vorteilhaft auch einstückig in einem Folgewerkzeug aus sauerstoffarmen Kupferblechen vorgefertigt werden. Hierzu wird vorzugsweise ein Profildraht einmal an der späteren Übergangsstelle Nut-Wickelkopf über die hohe Kante gebogen und anschließend, der später im Wickelkopf liegende Bereich mehrfach geprägt und über die schmale Kante gebogen. Abschließend wird der vorgeformte Wickelkopfbereich des L-Formteilleiters durch Warmverformen und/oder Schmieden in seine endgültige Gestalt gebracht.

Derartige L-Formteilleiter für die inneren Wickelkopfschichten bilden eine Aufnahme für das anzufügende Formteilleiterende, mit der sie dieses Formteilleiterende auf der Luftspaltseite umfassen. Im Gegensatz zu den separat vorgefertigten inneren Verbindungsleitern 5 sind die beiden radial verlaufenden Teilbereiche 8a, 8b rechts und links der Aufnahme 7 für das Nutstabende aufgrund des unterhalb des Nutbodens vorgesehenen Schlitzes 9 relativ zueinander bewegbar.

## Patentansprüche

1. Bausatz zum Erstellen einer ein Primärteil (1) und ein relativ dazu bewegbares Sekundärteil aufweisenden elektrischen Maschine, mit einem Nuten (3) aufweisenden weichmagnetischen Kern (2) für das Primärteil, mit in die Nuten (3) einsetzbaren Nutstäben (4) für eine verteilte Stabwicklung, mit Verbindungsleitern (5,5') zum Verbinden der in Montagestellung an einer Stirnseite des weichmagnetischen Kerns (2) aus den Nuten (3) herausragenden Enden (6) der Nutstäbe, wobei jeder Verbindungsleiter (5, 5') wenigstens zwei Teilbereiche (8a, 8b) hat zwischen denen eine Aufnahme (7) für ein mit dem Verbindungsleiter zu verbindenden Nutstabende gebildet ist, und wobei jeder Verbindungsleiter (5, 5a) einen Schlitz (9) aufweist, **dadurch gekennzeichnet, dass** die Teilbereiche (8a, 8b) an der in Montagestellung dem Sekundärteil abgewandten Seite der Aufnahme durch dem Schlitz, der sich bis zu der Aufnahme (7) erstreckt, voneinander getrennt sind, wobei der Schlitz (9) in Montagestellung quer zu einer durch die Nuten (3) aufgespannten Ebene verläuft, und wobei die Spaltweite des Schlitzes (9) durch elastisches Verformen des Verbindungsleiters (5) zum Anpassen der Abmessungen der Aufnahme (7) an die Abmessungen des Nutstabendes veränderbar ist.

2. Bausatz nach Anspruch 1, **dadurch gekennzeichnet, dass** der mindestens eine Verbindungsleiter (5, 5') wenigstens zwei U- oder klammerförmig ausgebildete Verbindungsleiterteile (10a, 10b) aufweist, deren Schenkelteile die Teilbereiche (8a, 8b) bilden, und dass die Schenkelteile eines inneren Verbindungsleiterteils (10b) in Montagestellung zwischen den Schenkelteilen eines äußeren Verbindungsleiterteils (10a) angeordnet sind.

3. Bausatz nach Anspruch 2, **dadurch gekennzeichnet, dass** die Verbindungsleiterteile (10a, 10b) Querstege (11a,11b, 11 c) aufweisen, welche die Schenkelteile miteinander verbinden, und dass die Verbindungsleiterteile (10a, 10b) derart ausgebildet sind, dass die Querstege (11 a, 11b, 11c) der äußeren und inneren Verbindungsleiterteile (10a, 10b) mindestens eines Verbindungsleiters (5) in Montagestellung in Erstreckungsrichtung der Nuten (3) hintereinander angeordnet sind.

4. Bausatz nach einem der Ansprüche 2 oder 3, **dadurch gekennzeichnet, dass** die inneren Verbindungsleiterteile (10b) jeweils über ihre gesamte Erstreckungsfläche quer zur Erstreckungsfläche eine etwa konstante Dicke aufweisen.

5. Bausatz nach einem der Ansprüche 2 bis 4, **dadurch gekennzeichnet, dass** die Verbindungsleiterteile (10a, 10b) derart ausgebildet sind, dass der Quersteg (11b) wenigstens eines inneren Verbindungsleiterteils (10b) in Montagestellung dichter an dem weichmagnetischen Kern (2) angeordnet ist als der Quersteg (11 a) wenigstens eines äußeren Verbindungsleiterteils (10a).

6. Bausatz nach einem der Ansprüche 2 bis 5, **dadurch gekennzeichnet, dass** die Verbindungsleiterteile (10a, 10b) der einzelnen Verbindungsleiter (5) jeweils miteinander verbunden sind, vorzugsweise mittels einer Schnappverbindung.

7. Bausatz nach einem der Ansprüche 2 bis 6, **dadurch gekennzeichnet, dass** die Verbindungsleiterteile (10a, 10b) derart ausgebildet sind, dass die Querstege (11 a, 11 b) der äußeren und inneren Verbindungsleiterteile (10a, 10b) mindestens eines Verbindungsleiters (5) in Montagestellung in einer normal zu der durch die Nuten (3) aufgespannten Ebene verlaufenden Richtung hintereinander angeordnet sind.

8. Bausatz nach einem der Ansprüche 2 bis 7, **dadurch gekennzeichnet, dass** bei wenigstens einem äußeren Verbindungsleiterteil (10a) die Breite (s), die dessen Schenkelteile in einer normal zur Erstreckungsebene des Verbindungsleiterteils (10a) verlaufenden Richtung aufweisen, etwa halb so groß ist wie die Breite (q), die der Quersteg (11a) dieses Verbindungsleiterteils (10a) in dieser Richtung hat.

9. Bausatz nach einem der Ansprüche 2 bis 8, **dadurch gekennzeichnet, dass** der Quersteg (11a) des äußeren Verbindungsleiterteils (10a) und der Quersteg (11 b) des inneren Verbindungsleiters (10b) einstückig miteinander verbunden sind.

10. Bausatz nach einem der Ansprüche 2 bis 9, **dadurch gekennzeichnet, dass** wenigstens ein Verbindungsleiter (5) an einem Endbereich vorzugsweise einstückig mit einem Nutstab (4) zu einem L-förmigen Formteilleiter verbunden ist, und dass an einem von diesem Endbereich entfernten weiteren Endbereich des Verbindungsleiters (5) die Teilbereiche (8a, 8b) mit der dazwischen gebildeten Aufnahme (7) für das Nutstabende (6) eines weiteren Formteilleiters vorgesehen sind.

11. Bausatz nach einem der Ansprüche 1 bis 10, **dadurch gekennzeichnet, dass** er mehrere Arten von Formteilleitern mit unterschiedlich langen Nutstäben (4) aufweist, dass die Länge der Nutstäbe (4) derart auf die Abmessungen der Verbindungsleiter (5, 5') und des weichmagnetischen Kerns (2) abgestimmt ist, dass in Montagestellung an wenigstens einer Stirnseite des weichmagnetischen Kerns (2) die Verbindungsleiter in mehreren, in Erstreckungsrichtung der Nutstäbe (4) zueinander versetzten Lagen angeordnet sind, und dass die einzelnen Wicklungsstränge der Stabwicklung vorzugsweise baugleiche Formteilleiter aufweisen.

12. Bausatz nach einem der Ansprüche 1 bis 11, **dadurch gekennzeichnet, dass** zusätzlich zu den die Teilbereiche (8a, 8b) aufweisenden ersten Verbindungsleitern (5) zweite Verbindungsleiter (5') vorgesehen sind, die jeweils zwei Nutstäbe (4) U-förmig und vorzugsweise einstückig miteinander verbinden, und dass die Verbindungsleiter (5, 5') derart ausgebildet sind, dass die ersten Verbindungsleiter (5) bei wenigstens einem Wicklungsstrang der Stabwicklung in Montagestellung jeweils an einer ersten Stirnseite des weichmagnetischen Kerns (2) und die zweiten Verbindungsleiter (5') jeweils an der dieser Stirnseite gegenüberliegenden zweiten Stirnseite des weichmagnetischen Kerns (2) angeordnet sind.

13. Bausatz nach einem der Ansprüche 1 bis 12, **dadurch gekennzeichnet, dass** die Teilbereiche (8a, 8b) wenigstens einer Aufnahme an ihren in Montagestellung dem Sekundärteil zugewandten Enden durch einen wenigstens eine Biegeverformungsstelle aufweisenden Brückenbereich (12) einstückig miteinander verbunden sind.

14. Bausatz nach Anspruch 13, **dadurch gekennzeichnet, dass** der Brückenbereich (12), ausgehend von dem einen Teilbereich (8a) zu dem anderen Teilbereich (8b), einen von einer geraden Linie abweichenden, vorzugsweise wellenlinien- oder zickzackförmigen Verlauf aufweist.

15. Bausatz nach Anspruch 13 oder 14, **dadurch gekennzeichnet, dass** die von dem Brückenbereich (12) entfernten Endbereiche der Teilbereiche (8a, 8b) Verbindungsstellen zum formschlüssigen Verbinden und insbesondere Verhaken und/oder Verstemmen der Teilbereiche (8a, 8b) aufweisen, und dass diese Verbindungsstellen vorzugsweise von der Aufnahme (7) für das Nutstabende (6) beabstandet sind.

16. Bausatz nach einem der Ansprüche 1 bis 15, **dadurch gekennzeichnet, dass** der Schlitz (9) eine Komponente aufweist, die in einer in Montagestellung normal zur Erstreckungsrichtung der Nuten (3) verlaufenden Ebene schräg zu der durch die Nuten (3) aufgespannten Ebene verläuft.

17. Bausatz nach einem der Ansprüche 1 bis 16, **dadurch gekennzeichnet, dass** sich der Querschnitt der Aufnahmen (7) und der Nutstabenden (6) in Montagestellung jeweils ausgehend von dem dem Sekundärteil zugewandten Ende der Aufnahme (7) zu dem gegenüberliegenden anderen Ende der Aufnahme (7) hin vorzugsweise V-förmig verjüngt.

## Claims

1. A kit for creating an electric motor, having a primary part (1) and a secondary part that is movable relative thereto, with a soft magnetic core (2) having grooves (3) for the primary parts, with bars (4) that are insertable into the grooves (3) for distributed bar winding, with connecting lines (5, 5') for connecting the ends (6) of the bars that project from the grooves (3) at one end face of the soft magnetic core (2) in assembly position, where each connecting line (5, 5') has at least two subsections (8a, 8b) between which a retainer (7) is formed for a bar end that is to be connected with the connecting line, and where each connecting line (5, 5a) has a slot (9), **characterized in that** the subsections (8a, 8b) on the side of the retainer (7) that faces away from the secondary part in assembly position are separated from each other by the slot that extends to the retainer (7), where the slot (9) in assembly position runs transversely to a plane that is stretched through the grooves (3), and where the gap width of the slot is changeable by elastically deforming the connecting line to match the dimensions of the retainer (7) to the dimensions of the bar end.

2. The kit according to Claim 1, **characterized in that** the at least one connecting line (5, 5') has at least two U-shaped or clamp-shaped connecting line parts (10a, 10b) whose legs form the subsections (8a, 8b), and that in assembly position the leg parts of an inner connecting line part (10b) are situated between the leg parts of an outer connecting line part (10a).

3. The kit according to Claim 2, **characterized in that** the connecting line parts (10a, 10b) have transverse bridges (11 a, 11 b, 11 c) which connect the leg parts with each other, and that the connecting line parts (10a, 10b) are designed so that the transverse bridges (11 a, 11 b, 11 c) of the outer and the inner connecting line parts (10a, 10b) of at least one connecting line (5) are situated one behind the other in the extension direction of the slots (3) in assembly position.

4. The kit according to one of Claims 2 or 3, **characterized in that** the inner connecting line parts (10b) each have an approximately constant thickness over their entire area of extent, transverse to the area of extent.

5. The kit according to one of Claims 2 through 4, **characterized in that** the connecting line parts (10a, 10b) are designed so that the transverse bridge (11b) of at least one inner connecting line part (10b) in assembly position is situated closer to the soft magnetic core (2) than the transverse bridge (11a) of at least one outer connecting line part (10a).

6. The kit according to one of Claims 2 through 5, **characterized in that** the connecting line parts (10a, 10b) of the individual connecting lines (5) are each connected with each other, preferably by means of a snap connection.

7. The kit according to one of Claims 2 through 6, **characterized in that** the connecting line parts (10a, 10b) are designed so that the transverse bridges (11a, 11 b) of the outer and inner connecting line parts (10a, 10b) of at least one connecting line (5) in assembly position are situated one behind the other in a direction running perpendicular to the plane stretched through the slots.

8. The kit according to one of Claims 2 through 7, **characterized in that** in at least one outer connecting line part (10a) the width (s) of its leg parts in a direction running perpendicular to the plane of extension of the connecting line part (10a) is about half as great as the width (q) of the cross bridge (11a) of that connecting line part (10a) in this direction.

9. The kit according to one of Claims 2 through 8, **characterized in that** the transverse bridge (11a) of the outer connecting line part (10a) and the transverse bridge (11b) of the inner connecting line (10b) are connected to each other in a single piece.

10. The kit according to one of Claims 2 through 9, **characterized in that** at least one connecting line (5) is connected at one end zone to a bar (4), preferably in a single piece, into an L-shaped formed sub-line, and that at another end zone of the connecting line (5) which is at a distance from this end zone the subsections (8a, 8b) are provided with the retainer (7) formed between them for the rod ends (6) of another shaped sub-line.

11. The kit according to one of Claims 1 through 10, **characterized in that** it has a plurality of types of shaped sub-lines with bars (4) of different lengths, that the length of the bars (4) is matched to the dimensions of the connecting lines (5, 5') and of the soft magnetic core (2) in such a way that in assembly position on at least one end face of the soft magnetic core (2) the connecting lines are arranged in a plurality of layers that are staggered from each other in the direction of extension of the bars (4), and that the individual winding phases of the bar winding preferably have formed sub-lines of like construction.

12. The kit according to one of Claims 1 through 11, **characterized** that in addition to the first connecting lines (5) that have the subsections (8a, 8b), there are second connecting lines (5), each of which join together two bars (4) in a U-shape and preferably in a single piece, and that the connecting lines (5, 5') are designed so that the first connecting lines (5) in at least one winding phase of the bar winding in assembly position are each situated on a first end face of the soft magnetic core (2), and the second connecting lines (5') are each situated on the second end face of the soft magnetic core (2), which is opposite that end face.

13. The kit according to one of Claims 1 through 12, **characterized in that** the subsections (8a, 8b) of at least one retainer, on their ends which face the secondary part in assembly position, are connected with each other in a single piece by a bridge zone (12) that has at least one bending deformation location.

14. The kit according to Claim 13, **characterized in that** the bridge zone (12), starting from the one sub-section (8a) to the other sub-section (8b), follows a course that differs from a straight line, preferably with a wavy or zigzag shape.

15. The kit according to Claim 13 or 14, **characterized in that** the end zones of the subsections (8a, 8b) that are remote from the bridge zone (12) have connection points for positive-fitting connection and in particular for interlocking and/or bracing of the subsections (8a, 8b), and that these connection points preferably are spaced at a distance from the retainer (7) for the bar end (6).

16. The kit according to one of Claims 1 through 15, **characterized in that** the slot (9) has a component that in assembly position runs in a plane which runs perpendicular to the direction of extension of the grooves (3) obliquely to the plane stretched through the grooves (3).

17. The kit according to one of Claims 1 through 16, **characterized in that** the cross section of the retainers (7) and of the bar ends (6) in assembly position tapers in each case preferably in a V shape, starting from the end of the retainer (7) facing the secondary part and continuing to the opposite other end of the retainer (7).

## Revendications

1. Lot de construction pour assembler une machine électrique présentant une partie primaire (1) et une partie secondaire pouvant être déplacée par rapport à la première, avec un noyau (2) magnétique doux présentant des rainures (3) pour la partie primaire, avec des barres à rainure (4) insérées dans les rainures (3) pour un enroulement à barre réparti, avec des conducteurs de liaison (5, 5') pour la liaison des extrémités (6), dépassant dans la position de montage sur un côté avant du noyau (2) magnétique doux des rainures (3) des barres à rainure, chaque conducteur de liaison (5, 5') ayant au moins deux zones partielles (8a, 8b) entre lesquelles est formé un logement (7) pour une extrémité de barre à rainure à relier aux conducteurs de liaison et chaque conducteur de liaison (5, 5') présentant une fente (9), **caractérisé en ce que** les zones partielles (8a, 8b) sont séparées l'une de l'autre sur le côté, opposé à la partie secondaire dans la position de montage, du logement (7) par la fente, qui s'étend jusqu'au logement (7), la fente (9) étant agencée dans la position de montage transversalement à un plan tendu par les rainures (3), et la largeur de fente de la fente (9) pouvant être modifiée par la déformation élastique du conducteur de liaison (5) pour l'adaptation des dimensions du logement (7) aux dimensions de l'extrémité de la barre à rainure.

2. Lot de construction selon la revendication 1, **caractérisé en ce que** le au moins un conducteur de liaison (5, 5') présente au moins deux parties de conducteur de liaison (10a, 10b) formés en U ou en forme de pince, dont les parties de branche forment les zones partielles (8a, 8b), et **en ce que** les parties de branche d'une partie intérieure de conducteur de liaison (10b) sont disposées dans la position de montage entre les parties de branche d'une partie extérieure de conducteur de liaison (10a).

3. Lot de construction selon la revendication 2, **caractérisé en ce que** les parties du conducteur de liaison (10a, 10b) présentent des nervures transversales (11a, 11b, 11c) qui relient les parties de branche entre elles, et **en ce que** les parties du conducteur de liaison (10a, 10b) sont réalisées de telle sorte que les nervures transversales (11a, 11b, 11c) des parties extérieures et intérieures du conducteur de liaison (10a, 10b) d'au moins un conducteur de liaison (5) sont disposées les unes derrière les autres dans la position de montage dans le sens d'extension des rainures (3).

4. Lot de construction selon l'une quelconque des revendications 2 ou 3, **caractérisé en ce que** les parties intérieures du conducteur de liaison (10b) présentent respectivement sur l'ensemble de leur surface d'extension transversalement à la surface d'extension une épaisseur à peu près constante.

5. Lot de construction selon l'une quelconque des revendications 2 à 4, **caractérisé en ce que** les parties du conducteur de liaison (10a, 10b) sont réalisées de telle sorte que la nervure transversale (11b) d'au moins une partie intérieure du conducteur de liaison (10b) est disposée dans la position de montage plus prêt du noyau (2) magnétique doux que la nervure transversale (11a) d'au moins une partie extérieure du conducteur de liaison (10a).

6. Lot de construction selon l'une quelconque des revendications 2 à 5, **caractérisé en ce que** les parties du conducteur de liaison (10a, 10b) des conducteurs de liaison (5) individuels sont reliées respectivement entre elles, de préférence au moins d'une liaison à encliquetage.

7. Lot de construction selon l'une quelconque des revendications 2 ou 6, **caractérisé en ce que** les parties du conducteur de liaison (10a, 10b) sont réalisées de telle sorte que les nervures transversales (11a, 11b) des parties extérieures et intérieures du conducteur de liaison (10a, 10b) d'au moins un conducteur de liaison (5) sont disposées dans la position de montage les unes derrière les autres dans une direction agencée perpendiculairement au plan tendu par les rainures (3).

8. Lot de construction selon l'une quelconque des revendications 2 ou 7, **caractérisé en ce que**, pour au moins une partie extérieure du conducteur de liaison (10a), la largeur (s), que ses parties de branche présentent dans une direction agencée perpendiculairement au plan d'extension de la partie du conducteur de liaison (10a), est à peu près moitié moins grande que la largeur (q), que la nervure transversale (11a) de cette partie du conducteur de liaison (10a) présente dans cette direction.

9. Lot de construction selon l'une quelconque des revendications 2 à 8, **caractérisé en ce que** la nervure transversale (11a) de la partie extérieure du conducteur de liaison (10a) et la nervure transversale (11b) du conducteur de liaison (10b) intérieur sont reliés entre eux d'une seule pièce.

10. Lot de construction selon l'une quelconque des revendications 2 à 9, **caractérisé en ce qu'**au moins un conducteur de liaison (5) est relié sur sa zone d'extrémité de préférence d'une seule pièce à une barre à rainure (4) pour former un conducteur en L de partie formée et **en ce que**, sur une autre zone d'extrémité, éloignée de cette zone d'extrémité, du conducteur de liaison (5), les zones partielles (8a, 8b) sont prévus avec le logement (7) formé entre les deux pour l'extrémité de la barre de rainure (6) d'un autre conducteur de partie moulée.

11. Lot de construction selon l'une quelconque des revendications 1 à 10, **caractérisé en ce qu'**il présente plusieurs types de conducteurs de pièce moulée avec des barres à rainure (4) de longueurs différentes, **en ce que** la longueur des barres à rainure (4) est adaptée aux dimensions des conducteurs de liaison (5, 5') et du noyau (2) magnétique doux de telle sorte que, dans la position de montage et sur au moins un côté avant du noyau (2) magnétique doux, les conducteurs de liaison sont disposés dans plusieurs couches décalées les unes par rapport aux autres dans le sens d'extension des barres à rainure (4) et **en ce que** les brins d'enroulement individuels de l'enroulement à barre présentent de préférence des conducteurs de partie moulée de construction identique.

12. Lot de construction selon l'une quelconque des revendications 1 à 11, **caractérisé en ce que**, en supplément des premiers conducteurs de liaison (5) présentant les zones partielles (8a, 8b), des seconds conducteurs de liaison (5') sont prévus, lesquels relient à chaque fois deux barres à rainure (4) en U et de préférence d'une seule pièce entre elles, et **en ce que** les conducteurs de liaison (5, 5') sont réalisés de telle sorte que les premiers conducteurs de liaison (5) sont disposés dans le cas d'au moins une branche de l'enroulement à barre dans la position de montage respectivement sur un premier côté avant du noyau (2) magnétique doux et les seconds conducteurs de liaison (5' ) sont disposés respectivement sur le second côté avant, opposé à ce côté avant, du noyau (2) magnétique doux.

13. Lot de construction selon l'une quelconque des revendications 1 à 12, **caractérisé en ce que** les zones partielles (8a, 8b) d'au moins un logement sont reliées d'une seule pièce entre elles sur leurs extrémités, tournées vers la partie secondaire dans la position de montage, par une zone de pont (12) présentant au moins un point de déformation de pliage.

14. Lot de construction selon la revendication 13, **caractérisé en ce que** la zone de pont (12) présente, à partir d'une zone partielle (8a) vers l'autre zone partielle (8b), un tracé différent d'une ligne droite, de préférence en forme de ligne ondulée ou de zigzag.

15. Lot de construction selon la revendication 13 ou 14, **caractérisé en ce que** les zones d'extrémité, éloignées de la zone de pont (12), des zones partielles (8a, 8b) présentent des points de liaison pour la liaison par complémentarité de forme et en particulier l'accrochage et/ou le matage des zones partielles (8a, 8b), et **en ce que** ces points de liaison sont de préférence espacés du logement (7) pour l'extrémité de barre à rainure (6).

16. Lot de construction selon l'une quelconque des revendications 1 à 15, **caractérisé en ce que** la fente (9) présente un composant qui est agencé dans un plan agencé dans la position de montage perpendiculairement à la direction d'extension des rainures (3) en biais par rapport au plan tendu par les rainures (3).

17. Lot de construction selon l'une quelconque des revendications 1 à 16, **caractérisé en ce que** la section des logements (7) et des extrémités de la barre à rainure (6) se rétrécit de préférence en V dans la position de montage à chaque fois à partir de l'extrémité, tournée vers la partie secondaire, du logement (7) vers l'autre extrémité opposée du logement (7).
